# EUROPEAN PATENT APPLICATION

(11) **EP 4 282 258 A1**
(43) Date of publication of application: **29.11.2023**
(21) Application number: 23175377.3
(22) Date of filing: 25.05.2023
(51) Int. Cl.: A01G 25/14

(54) **WATERING CAN**

(30) Priority: 25.05.2022 GB 202207688
(71) Applicant: Westland Horticulture Limited, Belfast, Antrim BT9 6SA (GB)
(72) Inventor: Barnard, Tim, Dungannon, BT70 1NJ (GB)
(74) Representative: Murgitroyd & Company

(57) **Abstract**

A watering can 1 comprises a body portion 2 and a detachable spout portion 3, wherein the body portion 2 is tapered along at least a part of the length of the body portion 2 and wherein the watering can 1 is shaped to allow close packing of a plurality of similar watering cans 1.

## Description

The present invention relates to watering cans. In particular, watering cans of the type used to water plants.

### Background

Watering cans can be used to water plants that are located far away from a source of water, such as a tap. Gardeners often prefer watering cans to long hoses for example when a feed material and water are to be provided to a plant simultaneously. While watering cans find many uses around the garden, they also suffer from several drawbacks.

Watering cans are typically quite bulky and take up a lot of space while being stored. Such storage problems are especially acute when large numbers of watering cans are being stored together, for example in warehouses or whilst being transported on pallets. Rising fuel prices and the negative environmental impact of transporting bulky goods such as watering cans over large distances means that there is a need for a more efficient way to store such goods.

It is typical for watering cans to be filled from e.g. a tap or hose for a certain length of time, and subsequently emptied over or near vegetation. This process must be repeated until all of the vegetation is sufficiently watered. As many gardeners know, the step of filling a watering can takes a long time, and the process of watering with a watering can often takes much longer than using a hose. There exists a need for a more efficient way to fill and use a watering can.

Watering cans are often supplied with means for providing different spray patterns and/or flow rates. Detachable 'roses' include a plurality of holes to allow gentler showering of plants to take place. However such attachments have a tendency to get mislaid, lost and/or damaged. There exists a need for an improved way to provide different spray patterns and/or flow rates from a watering can.

The present invention is directed at overcoming the problems outlined above.

### Objects of the invention

It is an object of the invention to provide a watering can that can be more easily stored.

It is a further object of the invention to provide a watering can that can be filled and used more efficiently.

It is a further object of the invention to provide an improved way to provide different spray patterns and/or flow rates from a watering can.

It is a further object of the invention to provide a watering can of simplified construction.

### Summary of the invention

According to a first aspect of the invention there is provided a watering can comprising a body portion and a spout portion, wherein the watering can is shaped to allow close packing of a plurality of similar watering cans. Advantageously, the shape of the watering cans facilitates compact storage in e.g. a pallet or box.

Preferably, the watering can is at least partly tapered.

Preferably, the watering can is tapered along at least a part of the length of the watering can.

Preferably, the body portion and/or spout portion is tapered along at least a part of the length of the body portion and/or spout portion.

Preferably, the watering can comprises opposing side walls.

Preferably, the opposing side walls are generally straight along at least a part of the length of the watering can.

Preferably, the watering can is made from plastic.

Preferably, the watering can is injection moulded.

Preferably, the watering can comprises a plurality of plastic parts.

Preferably, the spout portion and the body portion are separate parts.

Preferably, the spout portion is a generally hollow member.

Preferably, the spout portion is a generally tubular member.

Preferably, the spout portion comprises an attachment portion.

Preferably, the attachment portion is configured to allow the spout portion to be attached to another component, such as the body portion.

Preferably, the spout portion comprises a dispensing portion.

Preferably, the dispensing portion is configured to allow liquid to be dispensed from the watering can.

Preferably, the spout portion comprises a conduit portion.

Preferably, the conduit portion is configured to allow liquid to travel through the spout portion.

Preferably, the spout portion comprises a gripping means. Advantageously, the gripping means provides an area of increased grip or friction to allow the spout portion to be gripped or pulled.

Preferably, the gripping means is located on the surface of the spout portion.

According to a further aspect of the invention there is provided a watering can comprising a spray means, wherein the spray means is movable between an operative position and a release position. Advantageously, the watering can may be used with or without the spray means.

Preferably, the watering can comprises a spray means.

Preferably, the spray means is attachable to the watering can.

Preferably, the spray means is movably attachable to the watering can. Advantageously, the spray pattern can be quickly adjusted when required, without risk of losing the rose.

Preferably, the spray means is a rose.

Preferably, the spout portion comprises a spray means.

Preferably, the spray means is attachable to the spout portion.

Preferably, the spray means is attachable to the dispensing portion of the spout portion.

Preferably, the spray means is attachable via a hinged connection.

Preferably, the spray means has an operative position. Advantageously, in the operative position the spray means is located in the path for water to pass through and out of the watering can/spout portion.

Preferably, the spray means has a release position. Advantageously, in the release position the spray means is located out of the path for water to pass through and out of the watering can/spout portion.

Preferably, the spray means is movable between the operative position and the Preferably, the body portion is a generally hollow member.

Preferably, the body portion comprises a storage chamber. Advantageously, the storage chamber is adapted to store water.

Preferably, the body portion comprises two side walls.

Preferably, the body portion comprises opposing side walls.

Preferably, the side walls are generally straight.

Preferably, the body portion comprises an end wall.

Preferably, the body portion is at least partly tapered.

Preferably, the body portion is tapered along at least a part of the length of the watering can.

Preferably, the body portion is tapered along at least a part of the length of the body portion between the end wall and a delivery conduit.

Preferably, the side walls are tapered.

Preferably, an angle is formed between the side walls.

Preferably, the angle is an acute angle.

Preferably, the body portion comprises at least one handle.

Preferably, the body portion comprises a plurality of handles.

Preferably, the body portion comprises two handles.

Preferably, the body portion comprises a top handle.

Preferably, the top handle is a carrying handle.

Preferably, the body portion comprises an end handle.

Preferably, the end handle is a pouring handle.

Preferably, the body portion comprises an opening. Advantageously, the opening allows the watering can to be filled with water.

Preferably, the opening is in fluid communication with the storage chamber.

Preferably, in use, water is able to enter the storage chamber via the opening.

Preferably, the body portion comprises a delivery conduit. Advantageously, the delivery conduit is adapted to allow fluid to exit the body portion, for example the storage chamber.

Preferably, the delivery conduit is in fluid communication with the storage chamber.

Preferably, the delivery conduit comprises a delivery aperture.

Preferably, the delivery aperture is located at an end of the delivery conduit.

According to a further aspect of the invention there is provided a watering can comprising a connection means, wherein the connection means is adapted to allow the watering can to be connected to a source of water. Advantageously, the connection means allows the watering can to be filled quickly and efficiently.

Preferably, the watering can comprises a connection means for connecting the watering can to a source of water.

Preferably, the body portion comprises a connection means for connecting the watering can to a source of water.

Preferably, the connection means is a hose connector.

Preferably, the connection means is a male hose connector.

Preferably, in use, fluid is able to enter the storage chamber via the connection means.

Preferably, the connection means is attachable to a hose such that fluid is able to pass from the hose into the storage chamber via the connection means.

Preferably, the connection means is in fluid communication with the storage chamber.

Preferably, the connection means is proximal to the opening in the body portion.

Preferably, the connection means is located at the edge of the opening in the body portion.

According to a further aspect of the invention there is provided a watering can comprising a body portion and a spout portion, wherein the spout portion is releasably attachable to the body portion in a plurality of positions. Advantageously, the spout portion can be securely held in both storage and in-use configurations.

Preferably, the spout portion is attachable to and/or detachable from the body portion.

Preferably, the spout portion is releasably attachable to the body portion.

Preferably, the spout portion is releasably attachable to the body portion in a plurality of positions.

Preferably, the watering can has an in-use configuration.

Preferably, in the in-use configuration the spout portion is releasably attached to the body portion.

Preferably, in the in-use configuration the spout portion is held in an in-use position with respect to the body portion.

Preferably, in the in-use configuration, the delivery conduit is in fluid communication with the spout portion.

Preferably, the watering can has a storage configuration.

Preferably, in the storage configuration the spout portion is releasably attached to the body portion.

Preferably, in the storage configuration the spout portion is held in a storage position with respect to the body portion.

Preferably, the body portion comprises a first attachment means.

Preferably, the first attachment means is adapted for receiving the spout portion in the in-use position.

Preferably, the first attachment means of the body portion is attachable to the attachment portion of the spout portion.

Preferably, the first attachment means is located at an end of the delivery conduit. Preferably, the first attachment means is adapted to receive at least a part of the spout portion.

Preferably, the first attachment means is adapted to receive the attachment portion of the spout portion.

Preferably, the first attachment means is adapted to hold the attachment portion of the spout portion in a fixed location with respect to the body portion.

Preferably, the body portion comprises a second attachment means

Preferably, the second attachment means is adapted for receiving the spout portion in the storage position.

Preferably, the spout portion is at least partially receivable in the storage chamber of the body portion.

Preferably, the second attachment means is located at or proximal to the opening of the body portion.

Preferably, the second attachment means is adapted to receive at least a part of the spout portion.

Preferably, the second attachment means is adapted to receive the dispensing portion of the spout portion.

Preferably, the second attachment means is adapted to hold the dispensing portion of the spout portion in a fixed location with respect to the body portion.

Preferably, the second attachment means is adapted to hold at least part of the spout portion in a fixed location within the storage chamber.

According to a further aspect of the invention there is provided a storage arrangement comprising a plurality of watering cans.

Preferably, the storage arrangement comprises a pallet or box.

Preferably, the storage arrangement comprises a plurality of identical watering cans.

Preferably, the plurality of watering cans are in a close packed arrangement.

Preferably, each watering can is in the storage configuration.

### Drawings

The invention will be more clearly understood by the following description of some embodiments thereof, given by way of example only with reference to the accompanying drawings, in which:
Figure 1 is a perspective view of a watering can according to an aspect of the invention.
Figure 2 is an alternative perspective view of the watering can according to an aspect of the invention.
Figure 3 is a side view of the watering can according to an aspect of the invention.
Figure 4 is an alternative side view of the watering can according to an aspect of the invention.
Figure 5 shows front and rear views of the watering can according to an aspect of the invention.
Figure 6 shows top and bottom views of the watering can according to an aspect of the invention.
Figure 7 is a perspective view showing the spout portion of the watering can according to an aspect of the invention.
Figure 8 is a further perspective view showing the spout portion of the watering can according to an aspect of the invention.
Figure 9 is a side view showing the connection between the spout portion and body portion of the watering can according to an aspect of the invention.
Figure 10 is an exploded side view showing the connection between the spout portion and body portion of the watering can according to an aspect of the invention.
Figure 11 is an exploded perspective view showing the connection between the spout portion and body portion of the watering can according to an aspect of the invention.
Figure 12 is a perspective view showing the opening and connector of the watering can according to an aspect of the invention.
Figure 13 is a perspective view showing the spout portion being accommodated in the body portion of the watering can according to an aspect of the invention.
Figure 14 is a top view showing a storage arrangement according to an aspect of the invention.

### Detailed description

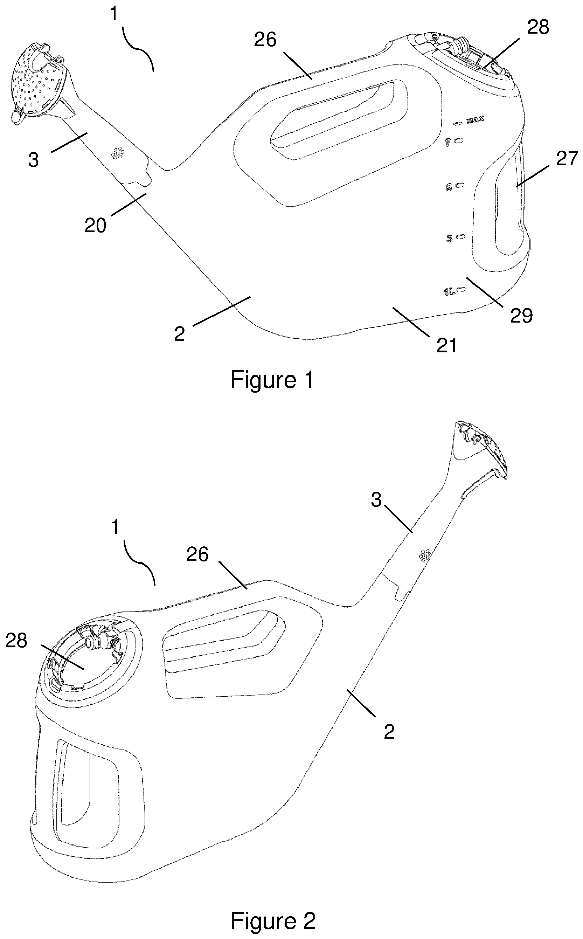

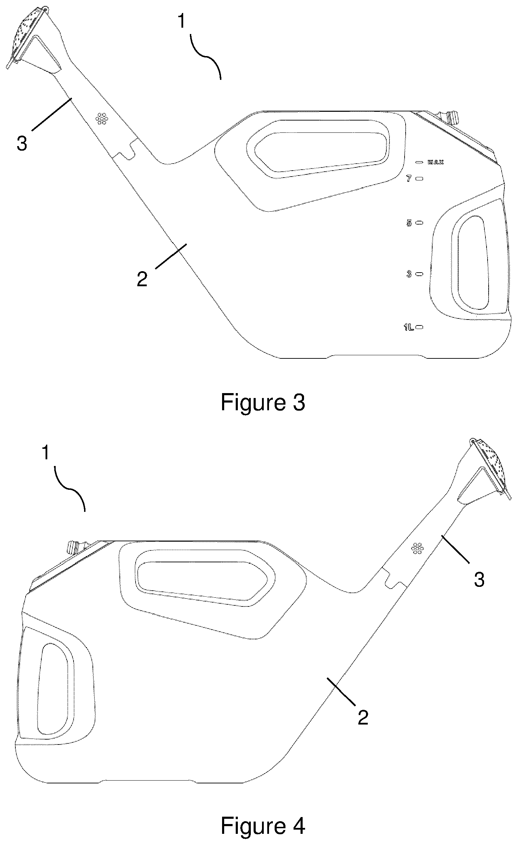

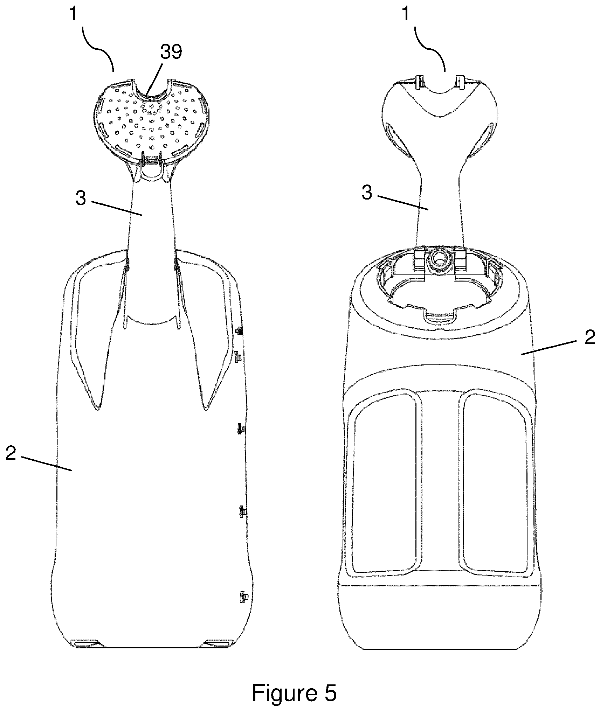

Figures 1-6 show a watering can 1 according to an aspect of the invention. The watering can 1 comprises a body portion 2 and a spout portion 3. The watering can comprises a plurality of injection moulded plastic parts. The spout portion 3 and the body portion 2 are separate parts. The spout portion 3 is releasably attachable to the body portion 2 in a plurality of positions. By releasably attachable it is meant that the spout portion 3 and body portion 2 can be repeatedly attached to and separated from one other.

The body portion 2 is a generally hollow member. The body portion 2 comprises a storage chamber 21 which, in use, is adapted to store water. The body portion comprises a delivery conduit 20. The delivery conduit 20 is adapted to allow fluid to exit the body portion 2, particularly the storage chamber 21. The delivery conduit 20 is in fluid communication with the storage chamber 21. The delivery conduit 20 comprises a delivery aperture. The delivery aperture is located at an end of the delivery conduit.

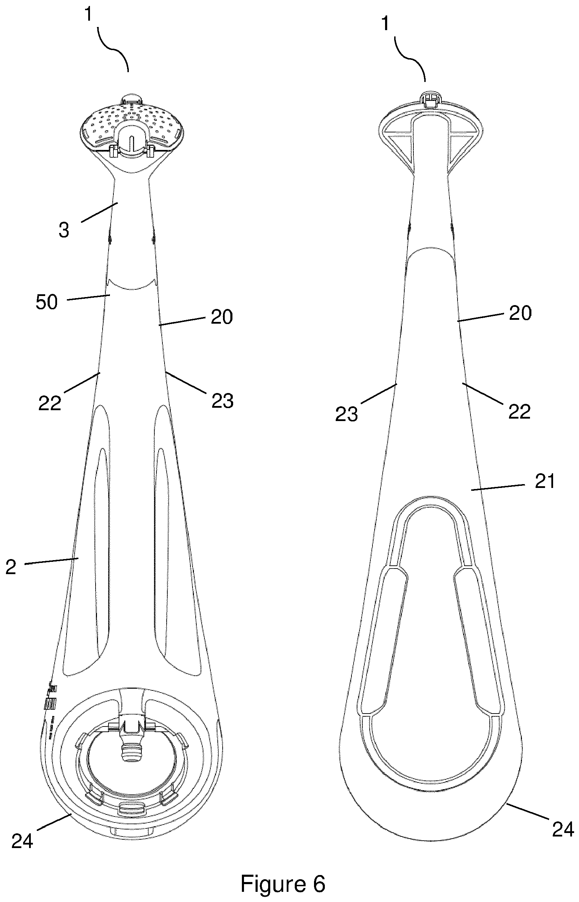

As shown in figure 6, the body portion 2 comprises two opposing side walls 22,23. The opposing side walls 22,23 at least partially define the storage chamber 21. The side walls 22,23 are generally straight. An end wall 24 joins the side walls at one end of the body portion 2. Opposite the end wall 24 at the other end of the side walls 22,23 is the delivery conduit 20.

The body portion 2 is at least partly tapered between the end wall 24 and the delivery conduit 20. An acute angle is formed between the side walls 22,23. The side walls 22,23 are tapered. The distance between the side walls 22,23 decreases gradually and continuously between the end wall 24 and the delivery conduit 20.

The body portion 2 comprises a top handle 26, which is a carrying handle, and an end handle 27, which is a pouring handle. It will be appreciated that either handle can be used for carrying or pouring the watering can. The pouring handle 27 is located at the end wall 24.

The body portion comprises an opening 28. The opening 28 allows the watering can to be filled with water, e.g. from a tap. The opening 28 is in fluid communication with the storage chamber 21. In use, water is able to enter the storage chamber 21 via the opening 28. A scale 29 is provided on the external surface of the body portion 2.

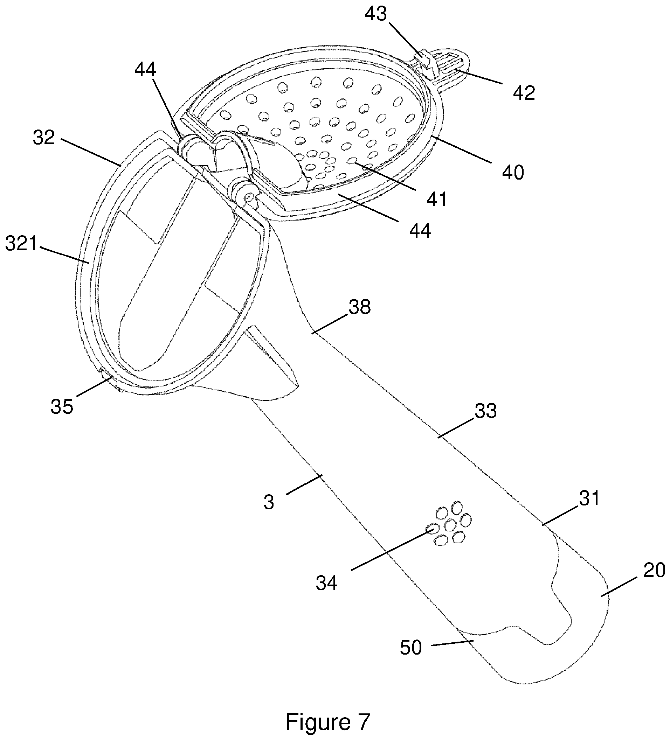

Figure 7 shows the spout portion 3 in detail. The spout portion 3 is a generally hollow tubular member. The spout portion 3 comprises an attachment portion 31. The attachment portion 31 is configured to allow the spout portion 3 to be attached to another component, such as the body portion 2, for example in a snap-fitting manner. The spout portion 3 comprises a dispensing portion 32. The dispensing portion 32 is configured to allow liquid to be dispensed from the watering can 1, in use. The spout portion 3 comprises a conduit portion 33. The conduit portion 33 is configured to allow liquid to travel through the spout portion 3 between the attachment portion 31 and the dispensing portion 32. The conduit portion has a waist 38. The spout portion 3 comprises a gripping arrangement 34. The gripping arrangement 34 provides an area of increased grip or friction to allow the spout portion 3 to be gripped or pulled, for example when separating the spout portion 3 and the body portion 2. The gripping arrangement 34 is located on the surface of the spout portion 3. A plurality of gripping arrangements 34 may be located on the surface of the spout portion 3 on either side of the spout portion.

The watering can 1 comprises a spray arrangement 40. The spray arrangement 40 is movably attachable to the watering can 1. The spray arrangement 40 allows the spray pattern from the watering can 1 to be adjusted, without risk of losing the spray arrangement 40.

The spray arrangement 40 is a rose which is attached to the spout portion 3. The spray arrangement 40 comprises a plurality of holes 41 for liquid to pass through, a handle 42 and a clip 43. The spray arrangement 40 is attached to the dispensing portion 3 of the spout portion 3 via a hinged connection 44.

The spray arrangement 40 has an operative position. Figures 1-6 show the spray arrangement 40 in the operative position. In the operative position the spray arrangement 40 abuts the dispensing portion 32 and obstructs the path for water passing through and out of the watering can 1/spout portion 3. In use, as water passes out of the watering can 1 with the spray arrangement 40 in the operative position, the water passes through the holes 41, creating a shower.

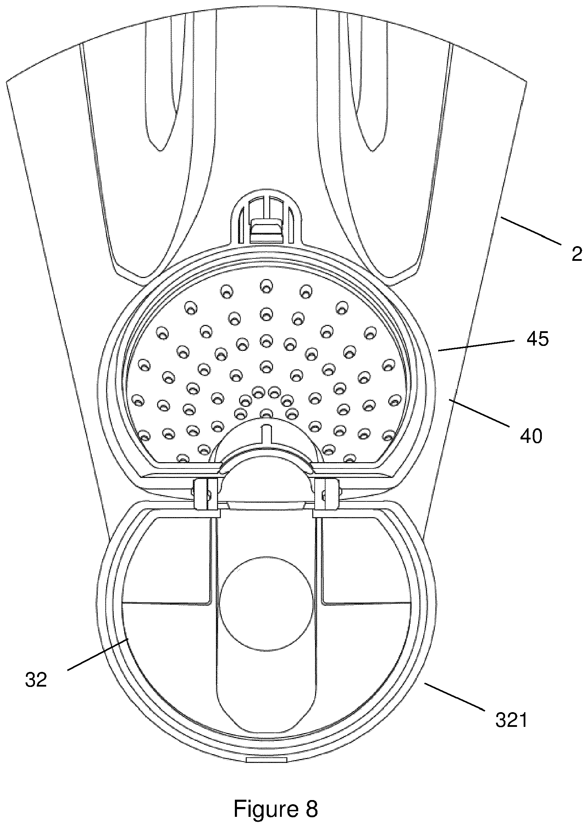

The spray arrangement 40 has a release position. Figures 7 and 8 show the spray arrangement 40 in the release position. In the release position the spray arrangement 40 is angled away from the dispensing portion 32 and does not obstruct the path for water to pass through and out of the watering can 1/spout portion 3. In use, as water passes out of the watering can 1 with the spray arrangement 40 in the release position, the water passes through the dispensing portion 32 in e.g. a single stream.

The spray arrangement 40 is movable between the operative position and the release position. The handle 42 allows a user to move the spray arrangement 40 between the operative and release positions. In the operative position, the clip 43 engages with an engagement arrangement 35 on the spout portion 3 to hold the spray arrangement 40 in place. In the operative position, the spray arrangement 40 is sealably held against the spout portion 3. In particular, a raised portion 45 on the inside of the spray arrangement engages with a recess 321 in the spout portion 3 to provide a fluid-tight seal.

The watering can 1 has an in-use configuration and a storage configuration. In the in-use configuration the watering can 1 is able to be filled with water and can be emptied via the spout portion (with the spray arrangement 40 being in either the operative position or the release position). In the storage configuration the watering can has a smaller footprint for easier and more compact storage.

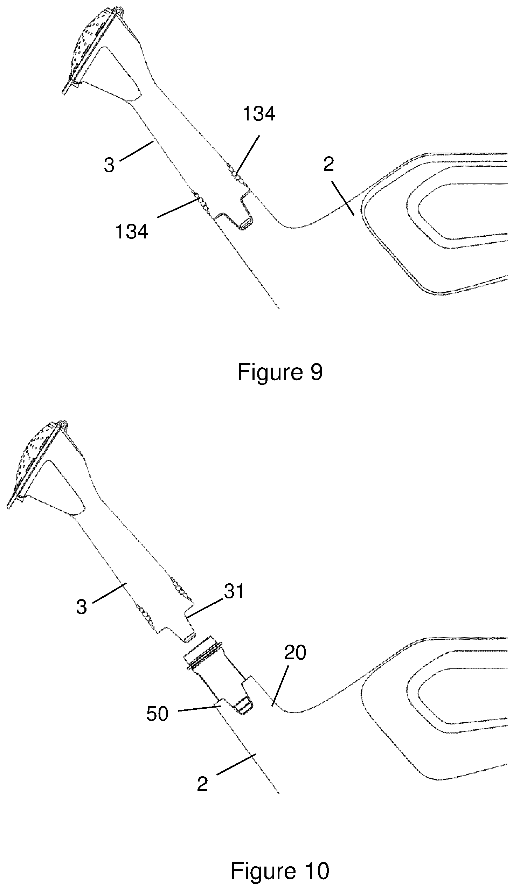

Figures 1-6 show the watering can 1 in its in-use configuration. In the in-use configuration, the spout portion 3 is releasably attached to the body portion 2. Figure 9 shows in detail the connection between the spout portion 3 and the body portion 2. In the example of figure 9 the spout portion 3 has an alternative gripping arrangement 134. In the in-use configuration the spout portion 3 is held in an in-use position with respect to the body portion 2. In the in-use configuration, the delivery conduit 20 of the body portion is in fluid communication with the spout portion 3.

The body portion 2 comprises a first attachment arrangement 50, as shown in e.g. figure 10. The first attachment arrangement 50 is adapted for receiving and holding the spout portion 3 in the in-use position. The first attachment arrangement 50 of the body portion 2 is attachable to the attachment portion 31 of the spout portion 3. The first attachment arrangement 50 is located at an end of the delivery conduit 20 i.e. that end of the delivery conduit where the delivery aperture is located and that is distal to the storage chamber 21. The first attachment arrangement 50 is adapted to hold the attachment portion 31 of the spout portion 3 in a fixed location with respect to the body portion 2.

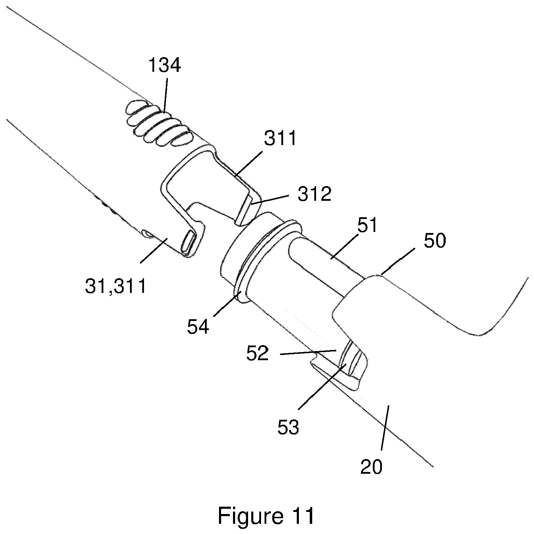

As shown in figure 11, the first attachment arrangement 50 of the body portion 2 comprises a tubular member 51 and two recess portions 52. The tubular member 51 is hollow and provides a fluid path between the delivery aperture of the delivery conduit 20 and the interior of the spout portion 3, in use. The recess portions 52 are located on opposing sides of the delivery conduit 20. The recess portions 52 are adapted to receive and retain part of the spout portion 3. In particular, the recess portions 52 are adapted to receive and retain part of the attachment portion 31 of the spout portion 3. The tubular member 51 comprises an engagement arrangement 53 and a flange or collar 54. The tubular member 51 extends in a direction away from the body portion 2.

The spout portion 3 comprises an attachment portion 31 adapted to engage with the attachment arrangement 50. Particularly, the tubular member 51 is adapted to be received inside the spout portion 3. The attachment portion 31 comprises engagement members 311. The engagement members 311 extend from the spout portion 3 on either side of the spout portion 3. Each engagement member 311 comprises a clipping arrangement 312. Each engagement member is adapted to extend into the recess portion 52, in use. Each clipping arrangement 312 is adapted to engage with a corresponding engagement arrangement 53, to hold the spout portion 3 in place in the in-use position.

The spout portion 3 can be attached to the body portion 2 by pushing the spout portion 3 onto the body portion 2. In particular, the attachment portion 31 of the spout portion 3 can be located over the tubular member 51 and pushed towards the body portion 2 until the engagement members 311 are received in the recess portions 52 and the clipping arrangements 312 engage with the engagement arrangements 53. The engagement arrangements 53 are protrusions on the tubular member 51. The spout portion 3 is resilient so that the engagement members 311 can flex and move over the engagement arrangements 53 and 'snap' into place. In the in-use configuration, the flange or collar 54 engages with the inner surface of the spout portion 3 to provide a seal.

The spout portion 3 can be released from the in-use position by squeezing the spout portion 3. In particular, squeezing or pushing the gripping arrangements 134 towards each other causes the spout portion 3 to deform such that the engagement members 311 flex and move away from each other. The engagement members 311 move out of engagement with the engagement arrangements 53 and the spout portion can be moved away from the body portion 2 until the tubular member 51 is no longer located within any part of the spout portion 3.

In the storage configuration the spout portion 3 is releasably attached to the body portion 2 at a different location to the in-use configuration. In the storage configuration the spout portion 3 is held in a storage position with respect to the body portion 2. In the storage position, the spout portion 3 is at least partially received in the storage chamber 21 of the body portion 2.

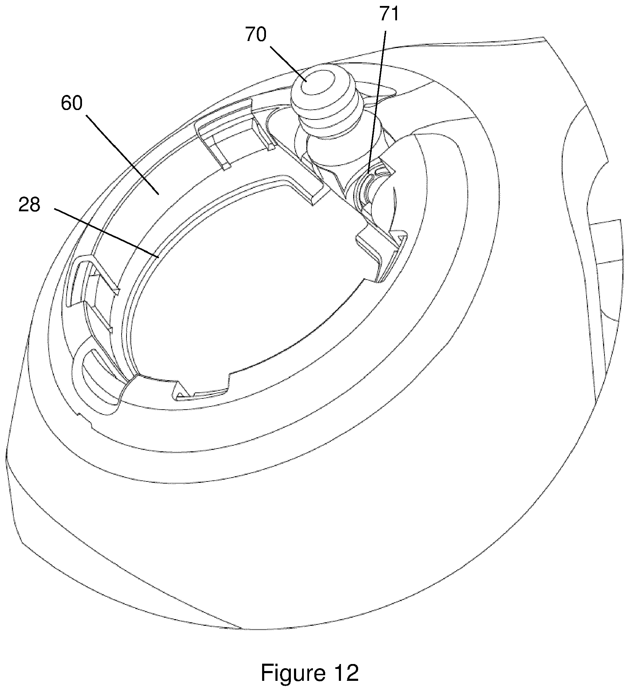

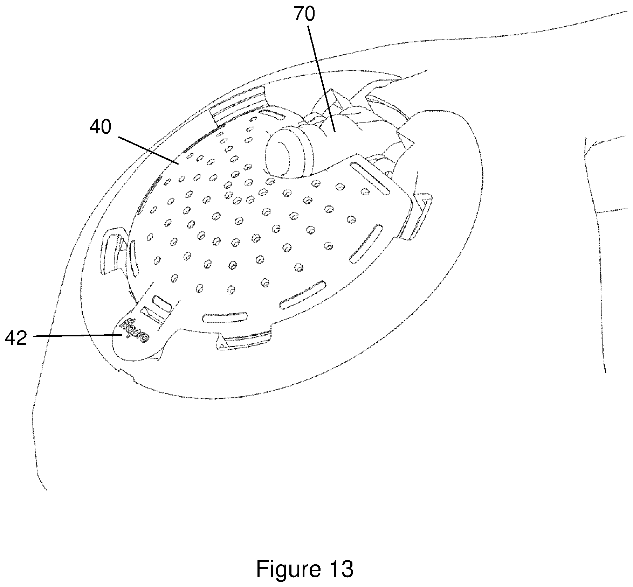

Turning to figure 12, the body portion 2 comprises a second attachment arrangement 60. The second attachment arrangement 60 is adapted for receiving and retaining the spout portion 3 in the storage position (shown in figure 13). The second attachment arrangement 60 is located at or proximal to the opening 28 of the body portion 2. The opening 28 of the body portion 2 is adapted to receive part of the spout portion 3. Part of the spout portion 3, particularly the attachment portion 31 and the conduit portion 33, can be inserted through the opening 28 until the attachment portion 31 and the conduit portion 33 are located in the storage chamber 21 and the dispensing portion 32 engages the second attachment arrangement 60. The second attachment arrangement 60 is adapted to hold the dispensing portion 32 of the spout portion 3 in a fixed location with respect to the body portion 2. The second attachment arrangement 60 is adapted to hold at least part of the spout portion (including the attachment portion 31 and the conduit portion 33) in a fixed location within the storage chamber 21. The outer shape of the dispensing portion 32 and the second attachment arrangement 60 are complementary to allow securement of the dispensing portion 32 to the second attachment arrangement 60.

Figure 13 shows the rear of the body portion 2 and the spray arrangement 40 when the spout portion 3 has been inserted through the opening 28 until the attachment portion 31 and the conduit portion 33 are located in the storage chamber 21. In this configuration, with the spout portion 3 being in the storage position, the dispensing portion 32 engages the second attachment arrangement 60 and the spray arrangement 40 is visible. The spout portion 3 can be taken out of the storage position by e.g. pulling on the handle 42.

The watering can 1 comprises a connection arrangement 70 for connecting the watering can 1 to a source of water. The connection arrangement 70 is a male hose connector. The connection arrangement 70 is attached to the body portion 2 via a hinged connection 71. The connection arrangement 70 is in fluid communication with the storage chamber 21. As shown in figure 12, the connection arrangement 70 is located at the edge of the opening 28. The spout portion 3 includes a recess 39 to accommodate the connection arrangement 70 when the spout portion 3 is in the storage position.

In use, fluid is able to enter the storage chamber 21 via the connection arrangement 70. The connection arrangement 70 is attachable to a hose such that fluid is able to pass from the hose into the storage chamber 21 via the connection arrangement 70. The connection arrangement 70 allows the watering can to be filled quickly and efficiently from a hose. The connection arrangement 70 allows the watering can to be filled while being used i.e. water can simultaneously enter the watering can 1 through the connection arrangement 70 and leave the watering can 1 via the spout portion 3.

The watering can 1 is shaped to allow close packing of a plurality of similar watering cans 1. In particular, the watering can 1 allows close packing of a plurality of similar watering cans 1 when the spout portion 3 is attached to the body portion in the storage position. Advantageously, the shape of the watering cans facilitates compact storage in e.g. a pallet or box.

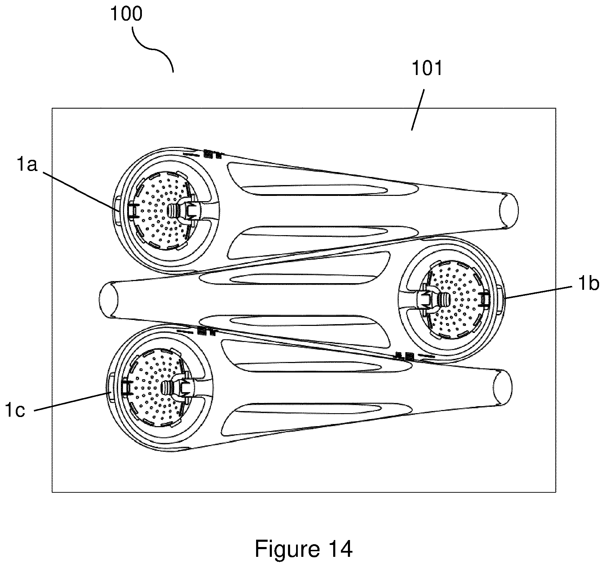

A storage arrangement can comprise a plurality of identical watering cans 1 and a pallet or box. Figure 14 shows an example storage arrangement 100 according to an aspect of the invention. In the example of figure 14, the storage arrangement 101 comprises three watering cans 1a-1c located on a pallet 101. As will be appreciated, any number of watering cans 1, and any suitably-sized pallet or box, can be used. The plurality of watering cans 1a-1c are in a close packed arrangement. In the close packed arrangement, the end wall 24 of each watering can 1a-1c is adjacent to the delivery conduit 20 of at least one neighbouring watering can 1. Each watering can 1a-1c in the storage arrangement 100 is in its storage configuration. The watering cans 1a-1c are able to be close packed due to their shape and because each watering can 1a-1c, in the storage configuration, is tapered along at least a part of the length of the watering can 1a-1c. Each watering can 1a-1c, in the storage configuration, comprises opposing side walls 22,23 (i.e. the opposing side walls of the body portion 2) which are generally straight along at least a part of the length of the watering can 1a-1c. The watering cans 1a-1c may be held in a fixed position on the pallet by any suitable means, such as plastic wrapping or straps.

The watering can 1 may be provided in kit form i.e. a kit of parts for forming a watering can falls within an aspect of the invention. The kit of parts can include any or all of the components outlined above, to allow the watering can 1 to be assembled. For example, the kit of parts can comprise a body portion 2 including a connection arrangement 70 and a spout portion 3 including a spray arrangement 40. The kit of parts may further include a hose.

As will be appreciated, the connection between the spout portion and the body portion in the in-use position, e.g. with reference to figures 9-11, is an illustrative example. In optional embodiments the spout portion and the body portion may be attached to one another in any other suitable way, for example using a push-fit or friction-fit connection.

The invention is not limited to the embodiments hereinbefore described which may be varied in both construction and detail within the scope of the appended claims.

## Claims

1. A watering can comprising a body portion and a detachable spout portion, wherein the body portion is tapered along at least a part of the length of the body portion and wherein the watering can is shaped to allow close packing of a plurality of similar watering cans.

2. A watering can according to claim 1, wherein the body portion comprises opposing side walls and wherein the opposing side walls are generally straight along at least a part of the length of the body portion.

3. A watering can according to claim 1 or claim 2, wherein the spout portion is releasably attachable to the body portion in a plurality of positions.

4. A watering can according to any preceding claim, wherein the watering can has an in-use configuration, and wherein in the in-use configuration the spout portion is releasably attached to the body portion in an in-use position.

5. A watering can according to any preceding claim, wherein the watering can has a storage configuration, and wherein in the storage configuration the spout portion is releasably attached to the body portion in a storage position.

6. A watering can according to claim 5 when dependent on claim 4, wherein the body portion comprises a first attachment means for receiving the spout portion in the in-use position and a second attachment means for receiving the spout portion in the storage position.

7. A watering can according to claim 6, wherein the first attachment means is adapted to receive an attachment portion of the spout portion and wherein the second attachment means is adapted to receive a dispensing portion of the spout portion.

8. A watering can according to any preceding claim, wherein the body portion comprises a storage chamber, optionally wherein the spout portion is at least partially receivable in the storage chamber, optionally wherein the body portion comprises an opening in fluid communication with the storage chamber

9. A watering can according to any preceding claim, wherein the body portion comprises a delivery conduit in fluid communication with the storage chamber, optionally wherein the body portion comprises a delivery aperture located at an end of the delivery conduit.

10. A watering can according to any preceding claim, wherein the body portion comprises a connection means for connecting the watering can to a source of water, optionally wherein the connection means is a hose connector, preferably a male hose connector.

11. A watering can according to any preceding claim, wherein the watering can comprises a spray means, optionally wherein the spray means is attachable to the dispensing portion of the spout portion.

12. A watering can according to claim 11, wherein the spray means is attachable to the spout portion via a hinged connection.

13. A watering can according to claim 11 or claim 12, wherein the spray means is movable between an operative position and a release position, optionally wherein in the operative position the spray means is located in the path for water to pass through and out of the spout portion, optionally wherein in the release position the spray means is located away from the path for water to pass through and out of the spout portion.

14. A storage arrangement comprising a plurality of watering cans according to any preceding claim, optionally wherein the storage arrangement comprises a pallet or box.

15. A storage arrangement according to claim 14, wherein the plurality of watering cans are in a close packed arrangement.
